# EUROPEAN PATENT SPECIFICATION

(11) **EP 3 356 661 B1**
(45) Date of publication and mention of the grant of the patent: **06.11.2019**
(21) Application number: 16779293.6
(22) Date of filing: 29.09.2016
(51) Int. Cl.: F01N 3/20, F01N 3/28, F01N 13/00

(54) **UNIFORM FLOW DISTRIBUTION OF A REDUCTANT**
GLEICHMÄSSIGE FLUSSVERTEILUNG EINES REDUKTIONSMITTELS
DISTRIBUTION DE FLUX UNIFORME D'UN AGENT RÉDUCTEUR

(30) Priority: 30.09.2015 US 201514870530
(43) Date of publication of application: 08.08.2018
(73) Proprietor: Caterpillar Inc., Deerfield, Illinois 60015 (US)
(72) Inventor: DAOUD, Mohamed, Dunlap, IL 61525 (US); BUI, Yung T., Peoria, IL 61615 (US); JUJARE, Arvind, Peoria, IL 61614 (US); WEISS, Kevin, Peoria, IL 61614 (US)
(74) Representative: BRP Renaud & Partner mbB Rechtsanwälte Patentanwälte Steuerberater
(86) International application number: PCT/US2016/054269
(87) International publication number: WO 2017/058971

(56) References cited:
- EP-A1- 0 886 043
- US-A1- 2014 053 539
- US-A1- 2014 369 898
- US-B1- 6 449 947

## Description

### Technical Field

The present disclosure relates to an after-treatment module for treating exhaust gases, and more particularly relates to a system and a method for uniform flow distribution of a reductant in an after-treatment module.

### Background

In the last few decades, a significant increase in the number of vehicles has been witnessed. A large number of running vehicles generate exhaust gases which contribute to atmospheric pollution. With the advancement of automobile technology, modern vehicles are equipped with after-treatment systems for treatment of the exhaust gases released from the vehicles. In particular, such after-treatment systems may be configured to treat and reduce toxic oxides of nitrogen (NOx) present in an exhaust gas flow, prior to the exhaust gas flow exiting into the atmosphere.

Usually, reductants, such as anhydrous ammonia, aqueous ammonia or urea are added to a stream of exhaust gases for treatment and reduction of the oxides of nitrogen (NOx). However, introduction of such reductants in the stream of exhaust gases is not usually uniform. This would directly lower the effectiveness of the after-treatment systems as the exhaust gases released into the atmosphere would still include undesirable amounts of NOx.

Further, due to the non-uniform distribution of urea, some of the urea may deposit on the walls of a conduit carrying the exhaust gases. This would also reduce the effectiveness of the after-treatment system. Moreover, this would demand regular maintenance of the after-treatment system adding up to an overall operational cost. In addition, because of limited space, exhaust conduits generally include some sharp turns along their length. Such turns would lead to turbulence in the exhaust gas flow and therefore, a non-uniform distribution of the urea in the stream of exhaust gases.

US 2013/0167516 A1 describes an arrangement for introducing a liquid medium into exhaust gases from a combustion engine. The arrangement comprises a mixing duct, a first flow guide, an injector, and a second flow guide. The first flow guide creates a first exhaust vortex in the mixing duct in such a manner that the exhaust gases, in this first exhaust vortex, rotate in a first direction of rotation during their movement downstream in the mixing duct. The injector injects the liquid medium into exhaust gases that are led into the liquid medium in an exhaust flow at the center of the first vortex. The second flow guide creates a second exhaust vortex in the mixing duct in such a manner that the exhaust gases in this second vortex rotate in a second direction of rotation. The second direction of rotation is opposite to the first direction of rotation, during their movement downstream in the mixing duct.

EP 0 886 043 A1 discloses an arrangement for the injection of a mixture of urea solution in air into the exhaust of an internal combustion engine. The mixture is passed through a tube which enters the wall of the exhaust pipe and then bends through 90 degrees to be coaxial with the exhaust pipe. A conical guide body is provided upstream of the nozzle of the tube.

US 6,449,947 B1 discloses a selective catalytic reduction system for engine exhaust which injects a source of ammonia, preferably an aqueous urea solution, or other ammonia solution, to preferably evaporate, decompose and hydrolyze to produce ammonia to react with and reduce NOx in the exhaust. A turbulence generator between the injector and a downstream catalyst enhances ammonia mixing upstream of the catalyst. A perforated reflector between the injector and the catalyst passes the exhaust through the perforations and reflects exhaust back toward the injector, to generate the turbulence to achieve enhanced ammonia mixing. A low pressure generator creates a low pressure evaporative diffusion enhancement zone at the injector accelerating evaporation rate and accelerating ammonia diffusion and mixing with the exhaust.

### Summary of the Disclosure

In one aspect of the present disclosure, a system for uniform flow distribution of a reductant is provided as set forth in claim 1. The system includes an injector lance and a diffuser assembly. The injector lance further includes a reductant supply conduit and an injector lance. The reductant supply conduit extends into an internal diameter of an exhaust conduit from a first end of the exhaust conduit towards a second end of the exhaust conduit. The injector lance is in communication with and extends perpendicular to the reductant supply conduit. The injector lance is located along a longitudinal axis of the exhaust conduit. Further, the diffuser assembly is integral with the injector lance.

In another aspect of the present disclosure, an after-treatment module for treating exhausting gases is provided as set forth in claim 7. The after-treatment module includes a housing, an exhaust inlet, an exhaust outlet, a mixing chamber, a catalytic chamber, and a reductant supply system for uniform flow distribution of a reductant. The housing further includes a first wall and a second wall spaced apart from the first wall. The exhaust inlet and the exhaust outlet are disposed through the first wall and the second wall, respectively. The mixing chamber and the catalytic chamber are disposed between the first wall and the second wall. Further, the mixing chamber and the catalytic chamber are in communication with the exhaust inlet and the exhaust outlet, respectively. Moreover, the mixing chamber and the catalytic chamber each have a flow-through configuration, and are arranged in a side-by-side arrangement. Further, the reductant supply system is disposed in the exhaust inlet for the uniform flow distribution of the reductant. The reductant supply system includes an injector lance and a diffuser assembly. The injector lance includes a reductant supply conduit and an injector lance. The reductant supply conduit extends into an internal diameter of an exhaust conduit from a first end of the exhaust conduit towards a second end of the exhaust conduit. The injector lance is in communication with the reductant supply conduit. Furthermore, the injector lance extends perpendicular to the reductant supply conduit. The injector lance is located along a longitudinal axis of the exhaust conduit. In addition, the diffuser assembly is integral with the injector lance.

Other features and aspects of this disclosure will be apparent from the following description and the accompanying drawings.

### Brief Description of the Drawings

FIG. 1 is a schematic view of an exemplary engine exhaust system, according to an embodiment of the present disclosure;
FIG. 2 is a perspective view of an after-treatment module for treating exhaust gases, according to an embodiment of the present disclosure;
FIG. 3 is a perspective view of a system with frustoconical shaped diffusers, according to an embodiment of the present disclosure;
FIG. 4 is a perspective view of a system with octagonal shaped diffusers, according to another embodiment of the present disclosure; and
FIG. 5 is a flowchart of a method of uniformly distributing a reductant into an exhaust conduit of an after-treatment module, which is not part of the claimed invention;

### Detailed Description

Reference will now be made in detail to specific embodiments or features, examples of which are illustrated in the accompanying drawings. Wherever possible, corresponding or similar reference numbers will be used throughout the drawings to refer to the same or corresponding parts.

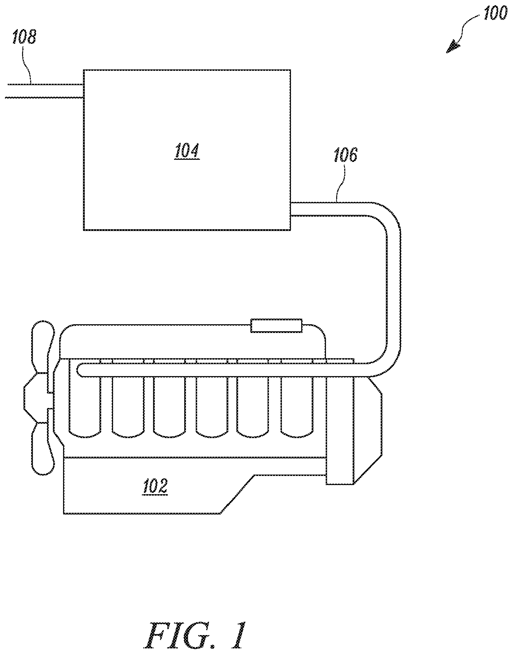

FIG. 1 illustrates a schematic view of an exemplary engine exhaust system 100, according to one embodiment of the present disclosure. The engine exhaust system 100 includes the engine 102, which may be an internal combustion engine, such as, a reciprocating piston engine or a gas turbine engine. The engine 102 may be a spark ignition engine or a compression ignition engine, such as, a diesel engine, a homogeneous charge compression ignition engine, or a reactivity controlled compression ignition engine, or other compression ignition engines known in the art. The engine 102 may be fueled by gasoline, diesel fuel, biodiesel, alcohol, natural gas, propane, combinations thereof, or any other combustion fuel known in the art.

As shown in FIG. 1, the engine exhaust system 100 includes an after-treatment module 104 fluidly connected to an exhaust conduit 106 of the engine 100. The after-treatment module 104 is configured to treat an exhaust gas flowing through the exhaust conduit 106 of the engine 100. The exhaust gas flow contains emission compounds that may include NOx, unburned hydrocarbons, particulate matter, and/or other combustion products known in the art. The after-treatment module 104 may be configured to trap or treat NOx, unburned hydrocarbons, particulate matter, combinations thereof, or other combustion products present in the exhaust gas flow, before exiting the engine exhaust system 100. For example, the after-treatment module 104 may be configured to reduce NOx to relatively less toxic or less polluting end products.

The after-treatment module 104 may include an injector lance (not shown) and a diffuser assembly (not shown). The injector lance may be used for injecting a reductant in a stream of exhaust gases present in the exhaust conduit 106 that are being fed to the after-treatment module 104. For the injection of the reductant, the injector lance may further include a reductant supply conduit (not shown) and an injector lance (not shown). In one embodiment, the reductant may include, but is not limited to a fluid, e.g., Diesel Exhaust Fluid (DEF). In another embodiment, the reductant may include urea, ammonia, or other reducing agent known in the art. The diffuser assembly may be collocated or integral with the injector lance.

The engine exhaust system 100 may include a compressor (not shown) for injecting a reductant into the stream of exhaust gases flowing in the exhaust conduit 106. The compressor can be kept in an operational mode continuously and therefore, the reductant may be continuously fed to the exhaust conduit 106 till the engine exhaust system 100 is operational.

In another embodiment, the engine exhaust system 100 may include a reductant tank (not shown) for storing the reductant. Parameters related to the reductant tank, such as size, shape, location, and material used may vary according to system design and requirements. Based on the system requirements, the reductant from the reductant tank is provided to the after-treatment module 104. Following the treatment of the exhaust gases by the after-treatment module 104, the treated exhaust gases may exit the engine exhaust system 100 for being released in the atmosphere through a stack 108.

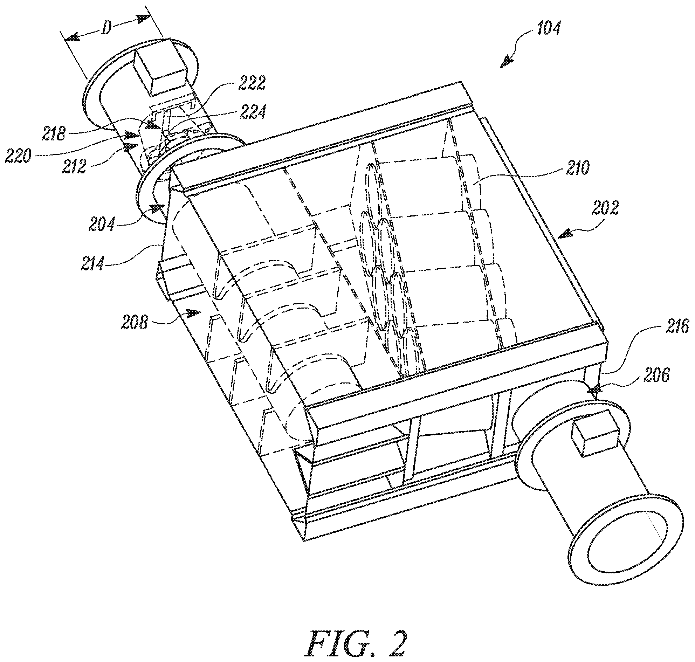

FIG. 2 illustrates a perspective view of the after-treatment module 104 for treating exhaust gases, according to an embodiment of the present disclosure. The after-treatment module 104 includes a housing 202, an exhaust inlet 204, an exhaust outlet 206, a mixing chamber 208, a catalytic chamber 210, and a system 212 disposed in the exhaust inlet 204 for a uniform flow distribution of a reductant.

The housing 202 may further include a first wall 214 and a second wall 216 that is spaced apart from the first wall 214. The exhaust inlet 204 and the exhaust outlet 206 may be disposed through the first wall 214 and the second wall 216, respectively. The mixing chamber 208 may be disposed between the first wall 214 and the second wall 216 in such a manner that the mixing chamber 208 is in alignment with the exhaust inlet 204. Therefore, during operation, the mixing chamber 208 can internally receive engine exhaust gas from the exhaust conduit 106. The catalytic chamber 210 may also be disposed between the first wall 214 and the second wall 216. Further, the catalytic chamber 210 may be in communication with the exhaust outlet 206.

As shown in FIG. 2, each of the mixing chamber 208 and the catalytic chamber 210 has a flow-through configuration. The flow-through configuration allows the stream of exhaust gases to flow through the first-after treatment zone 208 and into the catalytic chamber 210.

The mixing chamber 208 and the catalytic chamber 210 may be arranged in such a manner that the exhaust gas flowing in the exhaust conduit 106 may pass through the mixing chamber 208 and the catalytic chamber 210 in series before being released at the stack 108 connected downstream of the after-treatment module 104. In the present embodiment, the mixing chamber 208 and the catalytic chamber 210 can be arranged in a side-by-side arrangement.

In one embodiment, the mixing chamber 208 may include various exhaust gas treatment devices (not shown), e.g., a Diesel Oxidation Catalyst (DOC) and a Diesel Particulate Filter (DPF). The mixing chamber 208 and the components found therein are optional and may be omitted for various engine applications in which the exhaust treatment function provided by the mixing chamber 208 is not required.

In one embodiment, the catalytic chamber 210 may include, but is not limited to a Selective Catalytic Reduction (SCR) module (not shown) and an Ammonia Oxidation Catalyst (AMOX) (not shown). In one embodiment, the catalytic chamber comprises a plurality of SCR bricks. The SCR module may operate to treat exhaust gases exiting the engine exhaust system 100 in the presence of ammonia, which is provided after degradation of a urea-containing solution injected into the exhaust gas flow in the exhaust conduit 106. The AMOX may be used to treat any unused ammonia from the downstream flow of the SCR module before the treated exhaust gases are released to the atmosphere.

As shown in FIG. 2, the system 212 disposed in the exhaust inlet 204 may include an injector lance 218 and a diffuser assembly 220. The diffuser assembly 220 may be collocated or integral with the injector lance 218. The injector lance 218 may further include a reductant supply conduit 222 and an injector nozzle 224. The reductant supply conduit 222 may be extended into an internal diameter D of the exhaust conduit 106 from a first end of the exhaust conduit 106 to a second end of the exhaust conduit 106. In one embodiment, the internal diameter D of the exhaust conduit 106 may be approximately 20 inches. However, the geometrical specification of the exhaust conduit 106 may vary based on the operating conditions and application of the engine exhaust system 100. In one example, the operating conditions and application may include, but are not limited to engine speed, engine type, type of reductant to be used, type of fuel used for running the engine, and power of the engine.

The system 212 is configured to uniformly distribute a reductant at the plurality of SCR bricks. In one embodiment, the diffuser assembly 220 is configured to intercept an exhaust gas flowing upstream of the diffuser assembly 220, and to uniformly distribute the exhaust gas downstream of the diffuser assembly 220. As used herein, the term uniform includes a substantially uniform distribution with a variation of up to about 15% across the surface area. In one embodiment, the overall distribution of the reductant is standardized by up to 88% across the face of the catalysts at the plurality of SCR bricks.

In one example, a study was conducted to compare the distribution of a reductant, i.e., urea vapor, in a baseline system, i.e., a system without the diffuser assembly 220, and the system 212, i.e., a system that includes diffuser assembly 220. In the study, the reductant was injected via the injector lance 218 into a stream of exhaust gas. A plurality of SCR bricks containing 10 separate catalysts was provided downstream such that the reductant would be uniformly distributed over the face of each catalyst. Standard deviation values of the reductant concentration at the catalyst face for each of the 10 catalysts was measured in both the systems under study. The results of the study are provided in Table 1 as shown below.

**Table 1: Standard deviation of reductant concentration at catalyst faces.**

| **Catalyst No.** | **Baseline system** | **System 212** |
|---|---|---|
| 1 | 11% | 9% |
| 2 | 7% | 10% |
| 3 | 14% | 6% |
| 4 | 16% | 8% |
| 5 | 7% | 2% |
| 6 | 4% | 3% |
| 7 | 3% | 1% |
| 8 | 2% | 1% |
| 9 | 2% | 0% |
| 10 | 2% | 0% |
| **Overall** | **24%** | **12%** |

As shown in Table 1, the data indicates that the diffuser assembly 220 of system 212 was surprisingly and unexpectedly able to reduce the maximum individual catalyst standard deviation from 16% to 10% while it reduced the overall standard deviation from 24% to 12%, i.e., resulting in a 50% overall reduction in reductant variation as compared to the baseline system, i.e., a system without diffuser assembly 220, thereby leading to a uniform distribution.

As shown in FIG. 2, the injector nozzle 224 may be in communication with the reductant supply conduit 222. The injector nozzle 224 may extend perpendicular to the reductant supply conduit 222 in such a manner that it is located along a longitudinal axis of the exhaust conduit 106.

In one embodiment, the reductant supply conduit 222 may extend in a vertical direction across the internal diameter D of the exhaust conduit 106. In one embodiment, the diffuser assembly 220 may include one diffuser. In another embodiment, the diffuser assembly 220 may include two diffusers (not shown). In yet another embodiment, the diffuser assembly 220 may include three diffusers (not shown). The arrangement of the injector lance 218 and the diffuser assembly 220 would allow a horizontal spraying of the reductant into the stream of exhaust gases.

In the present embodiment, the exhaust conduit 106, the stack 108, the housing 202, the exhaust inlet 204, the exhaust outlet 206, the mixing chamber 208, the catalytic chamber 210, the injector lance 218, the diffuser assembly 220, the reductant supply conduit 222, and the injector nozzle 224 may be made of stainless steel. In another embodiment, the abovementioned components may be made of carbon steel. In the present embodiment, the after-treatment module 104 may be a tier-4 after-treatment module 104.

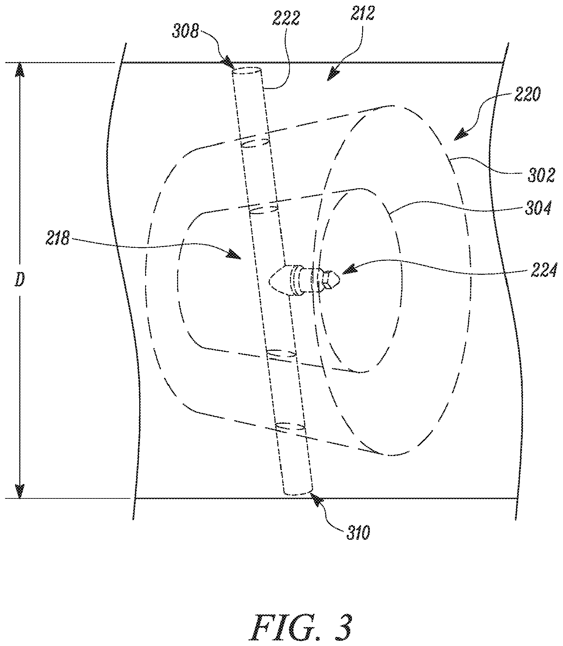

FIG. 3 illustrates a perspective view of a system 212 with an injector lance 218 and a diffuser assembly 220. The injector lance 218 includes a reductant supply conduit 222 and an injector nozzle 224. The diffuser assembly 220 includes two frustoconical shaped diffusers 302 and 304, according to an embodiment of the present disclosure. As shown in FIG. 3, the reductant supply conduit 222 extends vertically across the internal diameter D of the exhaust conduit 106 from the first end 308 to the second end 310 of the exhaust conduit 106. In the present embodiment, the two frustoconical shaped diffusers 302, 304 extend longitudinally along the exhaust conduit 106. The diffusers 302, 304 extend from a location upstream of the injector nozzle 224 to a location downstream past the injector nozzle 224. Therefore, the diffusers 302, 304 may ensure a uniform flow of the exhaust gases in the exhaust conduit 106 even before the introduction of the reductant into the flow. In the present embodiment, the diffusers 302, 304 are positioned concentric to each other. In some embodiments, the diffuser 302 may be larger, in terms of diameter, and longer on both ends as compared to the diffuser 304.

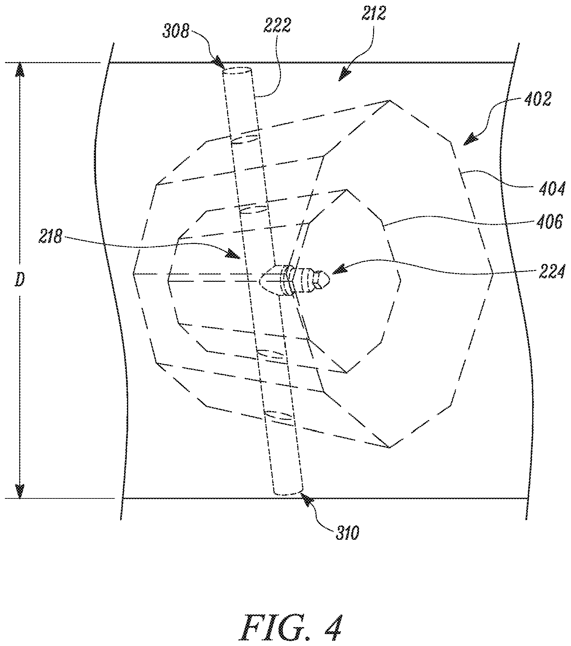

FIG. 4 illustrates a perspective view of an alternative embodiment of system 212. As shown, in the present embodiment, the diffuser assembly 402 includes two octagonal shaped diffusers 404, 406. The system 212 of the present embodiment may also include the injector lance 218. The injector lance 218 may further include the reductant supply conduit 222 and the injector nozzle 224. As shown in Fig. 4, the reductant supply conduit 222 extends vertically across the internal diameter D of the exhaust conduit 106. The diffusers 404, 406 may further extend from a location upstream of the injector nozzle 224 to a location downstream of the injector nozzle 224. The diffusers 404, 406 may be positioned concentric to each other. Such an arrangement may allow the diffuser 404 to be larger and longer than the diffuser 406. In one embodiment, the octagonal shaped diffusers 404, 406 may offer an ease of manufacturing.

### Industrial Applicability

The present disclosure relates to the system 212 for uniform distribution of a reductant, in accordance with an embodiment of the present disclosure. The system 212 may include the injector lance 218 and the diffuser assembly 220. The injector lance 218 further includes the reductant supply conduit 222 and the injector nozzle 224. The injector lance 218 and the diffuser assembly 220 of the system 212 may work in conjunction with each other for ensuring a uniform distribution of the reductant into the exhaust gases flowing through the exhaust conduit 106 of the engine exhaust system 100. The present disclosure also relates to a method 500 of uniformly distributing a reductant into an exhaust conduit.

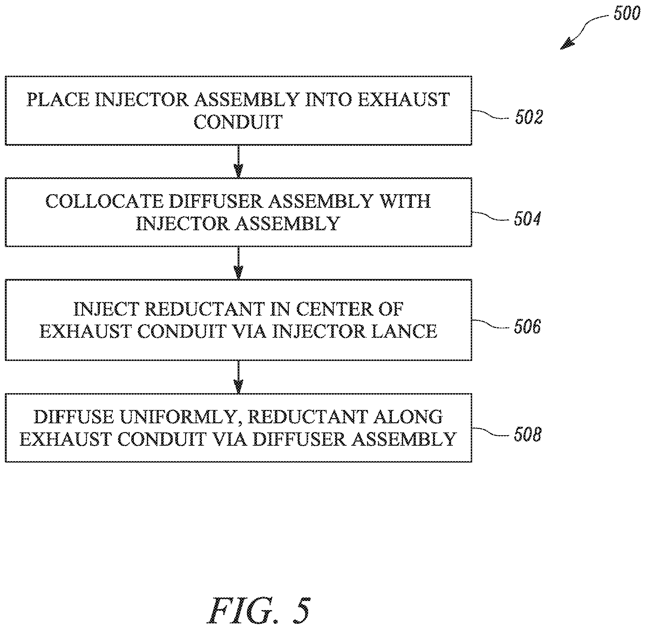

FIG. 5 illustrates a flow chart of a method 500 of uniformly distributing a reductant into an exhaust conduit 106, which is not part of the claimed invention. At step 502, an injector lance 218 is placed into the exhaust conduit 106. The injector lance 218 includes a reductant supply conduit 222 and an injector nozzle 224. In order to place the injector lance 218 into the exhaust conduit 106, the reductant supply conduit 222 may be extended vertically into an internal diameter D of the exhaust conduit 106. Further, the injector nozzle 224 may extend perpendicular to the reductant supply conduit 222. The injector nozzle 224 may be located along a longitudinal axis and in the center of a first end 308 and a second end 310 of the exhaust conduit 106.

At step 504, a diffuser assembly 220 may be collocated or integral with the injector lance 218. For collocating the diffuser assembly 220, the diffuser assembly 220 may be extended longitudinally along the internal diameter D. In one embodiment, the diffuser assembly 220 may include two diffusers 302, 304 that are positioned concentric to each other.

At step 506, the method 500 includes injecting a reductant along a longitudinal axis of the exhaust conduit 106 via the injector nozzle 224. At step 508, the reductant may be diffused uniformly along the exhaust conduit 106 via the diffuser assembly 220.

The diffusers 302, 304 in the present disclosure cover the surroundings of the injector nozzle 224 by extending from a location upstream of the injection lance 224 to a location downstream past the injector nozzle 224. As the injector nozzle 224 injects a reductant along a longitudinal axis of the exhaust conduit 106, the diffusers 302, 304 direct the flow of the exhaust gases uniformly towards the reductant, thereby resulting in a uniform distribution of the reductant into the stream of the exhaust gases. Further, the diffusers 302, 304 substantially reduce or prevent any turbulence and/or swirling of the exhaust gases before, during or after contact with the reductant, thereby resulting in more effective treatment of NOx in the exhaust gases. Moreover, as the injector nozzle 224 is located along a longitudinal axis of the exhaust conduit 106 and facilitates a horizontal spraying of the reductant into the exhaust gases, a uniform distribution of the reductant into the stream of exhaust gases is ensured. The uniform distribution leads to a complete evaporation of the reductant which in turn, substantially reduces the possibility of deposition of the reductant on the internal walls of the exhaust conduit 106 or on other components of the after-treatment module 104.

Further, the octagonal shaped diffusers 404, 406 may be easy to manufacture, for example, by bending a metal plate into the desired shape and welding the ends. Such features of the present disclosure would offer flexibility in manufacturing of the after-treatment module 104 as well. Therefore, the present disclosure offers a simple after-treatment module 104 that is effective, economic, convenient to maintain, and easy to manufacture.

The present invention is defined by the appended claims.

## Claims

1. A system (212) for uniform flow distribution of a reductant, the system (212) comprising:
an injector lance (218) comprising:
a reductant supply conduit (222) extending into an internal diameter (D) of an exhaust conduit (106) from a first end (308) of the exhaust conduit (106) towards a second end (310) of the exhaust conduit (106); and
an injector nozzle (224) in communication with, and extending perpendicular to the reductant supply conduit (222), wherein the injector nozzle (224) is located along a longitudinal axis of the exhaust conduit (106);
**characterized in that** the system (212) further comprises
a diffuser assembly (220) integral with the injector lance (218), wherein the diffuser assembly (220) comprises a plurality of diffusers (302, 304, 404, 406), the diffusers (302, 304, 404, 406) extending longitudinally along the exhaust conduit (106).

2. The system (212) of claim 1, wherein the reductant supply conduit (222) extends vertically into the internal diameter (D) of the exhaust conduit (106).

3. The system (212) of claim 1, wherein the plurality of diffusers (302, 304, 404, 406) extend from a location upstream of the injector nozzle (224) to a location downstream of the injector nozzle (224).

4. The system (212) of claim 1, wherein each of the plurality of diffusers (302, 304, 404, 406) are concentric to each other.

5. The system (212) of claim 1, wherein each of the diffusers (302, 304, 404, 406) of the plurality of diffusers (302, 304, 404, 406) has a frustoconical shape.

6. The system (212) of claim 1, wherein each of the diffusers (302, 304, 404, 406) of the plurality of diffusers (302, 304, 404, 406) has an octagonal shape.

7. An after-treatment module (104) for treating exhaust gases, the after-treatment module (104) comprising:
a housing (202) including a first wall (214) and a second wall (216) spaced apart from the first wall (214);
a first portion of an exhaust conduit (106) disposed through the first wall (214) and defining an exhaust inlet (204) therein;
a second portion of the exhaust conduit (106) disposed through the second wall (216) and defining an exhaust outlet (206) therein;
a mixing chamber (208) disposed between the first wall (214) and the second wall (216) and in communication with the exhaust inlet (204);
a catalytic chamber (210) disposed between the first wall (214) and the second wall (216) and in communication with the exhaust outlet (206), the mixing chamber (208) and the catalytic chamber (210) each having a flow-through configuration and arranged in a side-by-side arrangement; and
a reductant supply system disposed in the exhaust inlet (204) for uniform flow distribution of a reductant, the reductant supply system comprising:
an injector lance (218) comprising:
a reductant supply conduit (222) extending into an internal diameter (D) of an exhaust conduit (106) from a first end (308) of the exhaust conduit (106) towards a second end (310) of the exhaust conduit (106); and
an injector nozzle (224) in communication with, and extending perpendicular to the reductant supply conduit (222), wherein the injector nozzle (224) is located along a longitudinal axis of the exhaust conduit (106);
**characterized in that** the after-treatment module (104) further comprises
a diffuser assembly (220) integral with the injector lance (218), wherein the diffuser assembly (220) comprises a plurality of diffusers (302, 304, 404, 406), the diffusers (302, 304, 404, 406) extending longitudinally along the exhaust conduit (106).

8. The after-treatment module (104) of claim 7, wherein the catalytic chamber (210) comprises a plurality of selective catalytic reduction, SCR, bricks therein.

9. The after-treatment module (104) of claim 8, wherein the reductant supply system is configured to uniformly distribute a reductant at the plurality of SCR bricks.

## Patentansprüche

1. System (212) zur gleichmäßigen Durchflussverteilung eines Reduktionsmittels, wobei das System (212) umfasst:
eine Einspritzlanze (218), umfassend:
eine Reduktionsmittelzufuhrleitung (222), die sich in einen Innendurchmesser (D) einer Abgasleitung (106) von einem ersten Ende (308) der Abgasleitung (106) zu einem zweiten Ende (310) der Abgasleitung (106) erstreckt; und
eine Einspritzdüse (224), die mit der Reduktionsmittelzufuhrleitung (222) in Verbindung steht und sich senkrecht zu dieser erstreckt, wobei die Einspritzdüse (224) entlang einer Längsachse der Abgasleitung (106) angeordnet ist;
**dadurch gekennzeichnet, dass** das System (212) ferner eine in die Einspritzlanze (218) integrierte Diffusoranordnung (220) umfasst, wobei die Diffusoranordnung (220) eine Vielzahl von Diffusoren (302, 304, 404, 406) umfasst, wobei sich die Diffusoren (302, 304, 404, 406) in Längsrichtung entlang der Abgasleitung (106) erstrecken.

2. System (212) nach Anspruch 1, wobei sich die Reduktionsmittelzufuhrleitung (222) vertikal in den Innendurchmesser (D) der Abgasleitung (106) erstreckt.

3. System (212) nach Anspruch 1, wobei sich die Vielzahl von Diffusoren (302, 304, 404, 406) von einer der Einspritzdüse (224) vorgelagerten Stelle zu einer der Einspritzdüse (224) nachgelagerten Stelle erstreckt.

4. System (212) nach Anspruch 1, wobei die einzelnen der Vielzahl von Diffusoren (302, 304, 404, 406) konzentrisch zueinander angeordnet sind.

5. System (212) nach Anspruch 1, wobei jeder der Diffusoren (302, 304, 404, 406) der Vielzahl von Diffusoren (302, 304, 404, 406) eine kegelstumpfförmige Form aufweist.

6. System (212) nach Anspruch 1, wobei jeder der Diffusoren (302, 304, 404, 406) der Vielzahl von Diffusoren (302, 304, 404, 406) eine achteckige Form aufweist.

7. Nachbehandlungsmodul (104) zum Behandeln von Abgasen, wobei das Nachbehandlungsmodul (104) umfasst:
ein Gehäuse (202), das eine erste Wand (214) und eine zweiten Wand (216) beinhaltet, die in einem Abstand zur ersten Wand (214) angeordnet ist;
einen ersten Abschnitt einer Abgasleitung (106), der durch die erste Wand (214) angeordnet ist und einen Abgaseinlass (204) darin definiert;
einen zweiten Abschnitt der Abgasleitung (106), der durch die zweite Wand (216) angeordnet ist und einen Abgasauslass (206) darin definiert;
eine Mischkammer (208), die zwischen der ersten Wand (214) und der zweiten Wand (216) angeordnet ist und mit dem Abgaseinlass (204) in Verbindung steht;
eine Katalysatorkammer (210), die zwischen der ersten Wand (214) und der zweiten Wand (216) angeordnet ist und mit dem Abgasauslass (206) in Verbindung steht, wobei die Mischkammer (208) und die Katalysatorkammer (210) jeweils eine Durchflusskonfiguration aufweisen und nebeneinander angeordnet sind; und
ein Reduktionsmittelzufuhrsystem im Abgaseinlass (204) zur gleichmäßigen Durchflussverteilung eines Reduktionsmittels, wobei das Reduktionsmittelzufuhrsystem umfasst:
eine Einspritzlanze (218), umfassend:
eine Reduktionsmittelzufuhrleitung (222), die sich in einen Innendurchmesser (D) einer Abgasleitung (106) von einem ersten Ende (308) der Abgasleitung (106) zu einem zweiten Ende (310) der Abgasleitung (106) erstreckt; und
eine Einspritzdüse (224), die mit der Reduktionsmittelzufuhrleitung (222) in Verbindung steht und sich senkrecht zu dieser erstreckt, wobei die Einspritzdüse (224) entlang einer Längsachse der Abgasleitung (106) angeordnet ist;
**dadurch gekennzeichnet, dass** das Nachbehandlungsmodul (104) ferner eine in die Einspritzlanze (218) integrierte Diffusoranordnung (220) umfasst, wobei die Diffusoranordnung (220) eine Vielzahl von Diffusoren (302, 304, 404, 406) umfasst, wobei sich die Diffusoren (302, 304, 404, 406) in Längsrichtung entlang der Abgasleitung (106) erstrecken.

8. Nachbehandlungsmodul (104) nach Anspruch 7, wobei die Katalysatorkammer (210) eine Vielzahl von selektiven katalytischen Reduktionskeramiken (SCR-Keramiken) darin umfasst.

9. Nachbehandlungsmodul (104) nach Anspruch 8, wobei das Reduktionsmittelzufuhrsystem ausgelegt ist, um an der Vielzahl von SCR-Keramiken ein Reduktionsmittel gleichmäßig zu verteilen.

## Revendications

1. Système (212) de distribution d'écoulement uniforme d'un réducteur, le système (212) comprenant :
une lance d'injecteur (218) comprenant :
un conduit d'alimentation de réducteur (222) s'étendant dans un diamètre interne (D) d'un conduit d'échappement (106) depuis une première extrémité (308) du conduit d'échappement (106) vers une deuxième extrémité (310) du conduit d'échappement (106) ; et
une buse d'injecteur (224) en communication avec, et s'étendant perpendiculairement au conduit d'alimentation de réducteur (222), dans laquelle la buse d'injecteur (224) est située le long d'un axe longitudinal du conduit d'échappement (106) ;
**caractérisé en ce que** le système (212) comprend en outre un ensemble diffuseur (220) solidaire de la lance d'injecteur (218), dans lequel l'ensemble diffuseur (220) comprend une pluralité de diffuseurs (302, 304, 404, 406), les diffuseurs (302, 304, 404, 406) s'étendant longitudinalement le long du conduit d'échappement (106).

2. Système (212) selon la revendication 1, dans lequel le conduit d'alimentation de réducteur (222) s'étend verticalement dans le diamètre interne (D) du conduit d'échappement (106).

3. Système (212) selon la revendication 1, dans lequel la pluralité de diffuseurs (302, 304, 404, 406) s'étend depuis un emplacement en amont de la buse d'injecteur (224) jusqu'à un emplacement en aval de la buse d'injecteur (224).

4. Système (212) selon la revendication 1, dans lequel chacun de la pluralité de diffuseurs (302, 304, 404, 406) est concentrique l'un à l'autre.

5. Système (212) selon la revendication 1, dans lequel chacun des diffuseurs (302, 304, 404, 406) de la pluralité de diffuseurs (302, 304, 404, 406) a une forme tronconique.

6. Système (212) selon la revendication 1, dans lequel chacun des diffuseurs (302, 304, 404, 406) de la pluralité de diffuseurs (302, 304, 404, 406) a une forme octogonale.

7. Module de post-traitement (104) pour traiter des gaz d'échappement, le module de post-traitement (104) comprenant :
un logement (202) incluant une première paroi (214) et une deuxième paroi (216) espacée de la première paroi (214) ;
une première partie d'un conduit d'échappement (106) disposée à travers la première paroi (214) et définissant une entrée d'échappement (204) à l'intérieur de celle-ci ;
une deuxième partie du conduit d'échappement (106) disposée à travers la deuxième paroi (216) et définissant une sortie d'échappement (206) à l'intérieur de celle-ci ;
une chambre de mélange (208) disposée entre la première paroi (214) et la deuxième paroi (216) et en communication avec l'entrée d'échappement (204) ;
une chambre catalytique (210) disposée entre la première paroi (214) et la deuxième paroi (216) et en communication avec la sortie d'échappement (206), la chambre de mélange (208) et la chambre catalytique (210) ayant chacune une configuration d'écoulement et agencée dans un agencement côte à côte ; et
un système d'alimentation de réducteur disposé dans l'entrée d'échappement (204) pour une distribution d'écoulement uniforme d'un réducteur, le système d'alimentation de réducteur comprenant :
une lance d'injecteur (218) comprenant :
un conduit d'alimentation de réducteur (222) s'étendant dans un diamètre interne (D) d'un conduit d'échappement (106) depuis une première extrémité (308) du conduit d'échappement (106) vers une deuxième extrémité (310) du conduit d'échappement (106) ; et
une buse d'injecteur (224) en communication avec, et s'étendant perpendiculairement au conduit d'alimentation de réducteur (222), dans laquelle la buse d'injecteur (224) est située le long d'un axe longitudinal du conduit d'échappement (106) ;
**caractérisé en ce que** le module de post-traitement (104) comprend en outre un ensemble diffuseur (220) solidaire de la lance d'injecteur (218), dans lequel l'ensemble diffuseur (220) comprend une pluralité de diffuseurs (302, 304, 404, 406), les diffuseurs (302, 304, 404, 406) s'étendant longitudinalement le long du conduit d'échappement (106).

8. Module de post-traitement (104) selon la revendication 7, dans lequel la chambre catalytique (210) comprend une pluralité de briques de réduction catalytique sélective, SCR, à l'intérieur de celle-ci.

9. Module de post-traitement (104) selon la revendication 8, dans lequel le système d'alimentation de réducteur est configuré pour distribuer uniformément un réducteur au niveau de la pluralité de briques SCR.
